# EUROPÄISCHE PATENTSCHRIFT

(11) **EP 0 968 300 B1**
(45) Veröffentlichungstag und Bekanntmachung des Hinweises auf die Patenterteilung: **05.03.2008**
(21) Anmeldenummer: 98905396.2
(22) Anmeldetag: 04.02.1998
(51) Int. Cl.: C12P 7/62, C12P 1/00

(54) **ABBAU VON BIOLOGISCH ABBAUBAREN POLYMEREN MIT ENZYMEN**
DEGRADATION OF BIOLOGICALLY DEGRADABLE POLYMERS USING ENZYMES
DECOMPOSITION DE POLYMERES BIODEGRADABLES AVEC DES ENZYMES

(30) Priorität: 17.02.1997 DE 19706023
(43) Veröffentlichungstag der Anmeldung: 05.01.2000
(73) Patentinhaber: Novozymes A/S, 2880 Bagsvaerd (DK)
(72) Erfinder: KOCH, Rainhard, D-51065 Köln (DE); LUND, Henrik, DK-2200 Kopenhagen N (DK)
(86) Internationale Anmeldenummer: PCT/EP1998/000585
(87) Internationale Veröffentlichungsnummer: WO 1998/036086

(56) Entgegenhaltungen:
- WO-A-94/26812
- DATABASE WPI Section Ch, Week 9405 Derwent Publications Ltd., London, GB; Class A23, AN 94-039714 XP002900061 & JP 05 344 897 A (AMANO PHARM KK)
- CHEMICAL ABSTRACTS, vol. 126, no. 16, 21. April 1997 Columbus, Ohio, US; abstract no. 212899, CHIKYU KANKYO SANGYO GIJUTSU K.: "Biodegradable, flexible polymer compositions" XP002900072 & JP 09 020 857 A 21. Januar 1997
- R.-J. MÜLLER: "Mechanistic Studies on the Biodegradation of Polyester" MONOGRAPHS, Bd. 133, 1996, XP002900064 HAMBURG, DE
- M. MOCHIZUKI ET AL.: "Classification of Aliphatic Polyesters" POLYMERS FOR ADVANCED TECHNOLOGIES, Bd. 8, Nr. 4, April 1997, Seiten 203-209, XP002900065

## Beschreibung

Die Erfindung betrifft den vollständigen Abbau von Formkörpern, Flächengebilden, Beschichtungen, Verklebungen oder Schäumen aus biologisch abbaubaren Polymeren mit Enzymen. Insbesondere betrifft sie den enzymatischen Abbau von Polyesteramiden und Harnstoffgruppen aufweisenden Polyesterurethanen.

Vollständig biologisch abbaubare und kompostierbare Werkstoffe gewinnen zunehmend an Bedeutung. In den letzten Jahren ist eine Vielzahl derartiger Polymere mit dem Ziel entwickelt worden, einen Kunststoff verfügbar zu haben, der durch Kompostierung verwertet werden kann. Zur gleichen Zeit sind verschiedene Verordnungen und Normen erlassen worden, die den Zugang derartiger Materialien zur Kompostierung regeln (LAGA Merkblatt M 10) bzw. die schadlose Kompostierbarkeit nachzuweisen vermögen (DIN 54900). Unter biologischem Abbau wird in diesem Zusammenhang immer verstanden, daß die so bezeichneten Materialien in Gegenwart von Mikroorganismen durch diese vollständig zu CO₂ und Biomasse verstoffwechselt werden.

Von einigen Kunststoffen ist bekannt, daß deren Abbaubarkeit nicht nur durch das Wachstum von Mikroorganismen auf dem Polymer nachzuweisen ist, sondern auch mit Hilfe von Enzymen detektiert werden kann. Dabei wird das Prüfmaterial mit geeigneten Enzymen inkubiert und die Abbauprodukte werden analysiert (Jap. Pat. 56022324, Jap. Pat. 06322263, Polymer Degradation and Stability, 1992, S 241 - 248). Andere Autoren nutzen die enzymatische Abbaubarkeit zum Nachweis einer prinzipiellen biologischen Abbaubarkeit im Rahmen der Grundlagenforschung (Y. Tokiwa et al. in: J. E. Glass (Hrsg.) ACS Symposium series 433, 1990, S. 136 - 148). Im zitierten Artikel wird ausdrücklich erwähnt, daß ein vollständiger Abbau des Polymers nicht untersucht wurde. Über einen vermeintlich vollständigen Polymerabbau wird in (FR 93-6070) berichtet. Bei dem hier verwendeten Polypropylenfumarat erreicht man jedoch lediglich die Spaltung der Esterbindungen. Polypropylen, das bekanntermaßen nicht biologisch abbaubar ist, bleibt zurück. In allen bisher bekannten Fällen verlief der enzymatische Polymerabbau entweder nur in sehr geringem Umfang oder aber sehr langsam. Eine gezielte Auswahl von Enzymen, die die untersuchten Polymere besonders effizient und schnell abbauen, ist nicht erwähnt.

Ebenso wird nicht auf mögliche technisch umsetzbare Anwendungen eines vollständigen Polymerabbaus mit Hilfe von Enzymen hingewiesen.

Von Polyesteramiden ist allgemein bekannt, daß sie einem biologischen Abbau unterliegen können (J. Appl. Polym. Sci., 1979, S 1701 - 1711, US-Pat 4343931, US-Pat 4529792, Jap. Pat. 79119593, Jap. Pat. 79119594, EP-A 641817).

Von Harnstoffgruppen aufweisenden Polyesterurethanen ist ebenfalls bekannt, daß sie vollständig biologisch abbaubar sein können. Die Geschwindigkeit und der Umfang des Abbaus hängen von der Monomerzusammensetzung ab (DE-A 195 17 185). Der enzymatische Angriff einzelner Bindungen durch ein proteolytisches Enzym bei solchen Polymeren ist beschrieben worden (G. T. Howard, R. C. Blake, ASM General Meeting 1996, Abstracts S 430). Ein vollständigen Abbau einer Folie oder eines Formkörpers wird nicht beschrieben.

Es wurde gefunden, daß Formkörper aus biologisch abbaubaren Polymeren mit Hilfe von bestimmten Enzymen bzw. Mischungen dieser bestimmten Enzyme mit gegebenenfalls weiteren Enzymen vollständig abgebaut werden können. Es wurde weiterhin gefunden, daß ausgewählte Enzyme in der Lage sind, derartige Polymere in technisch umsetzbaren Zeiträumen vollständig abzubauen. Dabei wird das Molekulargewicht des Polymers so weit reduziert, daß daraus hergestellte Produkte schnell bis zu den Monomeren abgebaut und vollständig aufgelöst werden. Dies gilt insbesondere für Folien, Flächengebilden, Beschichtungen, Verklebungen, Spritzgußteile und Granulate aus biologisch abbaubaren Polymeren.

Die Zeiträume, die für eine vollständige Auflösung des Polymers notwendig sind, sind außerordentlich kurz. Der zugige und vollständige Abbau gelingt aber nur, wenn eine spezielle Kombination von Polymer und Enzym gewählt wird. Hierdurch unterscheidet sich der gefundene Effekt ganz wesentlich von den bisher bekannten Arbeiten zum enzymatischen Abbau biologisch abbaubarer Polymere.

Gegenstand der Erfindung ist ein Verfahren zum enzymatischen Abbau von biologisch abbaubaren Polymeren, insbesondere Polyesteramiden und Harnstoffgruppen aufweisenden Polyesterurethanen, wobei die biologisch abbaubaren Polymere mit einer wässrigen Lösung, die gepuffert sein kann, enthaltend eine oder mehrere Lipasen oder Cutinasen, insbesondere ausgewählt aus der Gruppe der Lipase aus *Candida antarctica,* insbesondere Komponente B, der Lipase aus Mucor Miehei (z.B. Lipozyme 20.000 L), der Lipase aus *Aspergillus niger* und der Cutinase aus Humicola insolens oder eine oder mehrere dieser Lipasen und Cutinasen in Kombination mit weiteren Enzymen behandelt werden.

Als biologisch abbaubare und kompostierbare Polymere kommen aliphatische oder teilaromatische Polyester, thermoplastische aliphatische oder teilaromatische Polyesterurethane, die auch Harnstoffgruppen aufweisen können, aliphatisch-aromatische Polyestercarbonate und aliphatische oder teilaromatische Polyesteramide in Frage. Bevorzugt kommen Polyesteramide und Harnstoffgruppen aufweisende Polyesterurethane in Frage.

Die folgenden Polymere sind geeignet:
Aliphatische oder teilaromatische Polyester aus
   A) linearen bifunktionellen Alkoholen, vorzugsweise C₂-C₁₂-Alkyldiolen, wie beispielsweise Ethandiol, Butandiol, Hexandiol, bevorzugt Butandiol, und/oder gegebenenfalls cycloaliphatischen bifunktionellen Alkoholen wie beispielsweise Cyclohexandimethanol und/oder gegebenenfalls geringen Mengen verzweigten bifunktionellen Alkoholen, vorzugsweise C₃-C₁₂-Alkyldiolen, wie beispielsweise Neopentylglygol, und zusätzlich gegebenenfalls geringen Mengen höherfunktionellen Alkoholen, vorzugsweise C₃-C₁₂-Alkylpolyole, wie beispielsweise 1,2,3-Propantriol oder Trimethylolpropan, sowie aus aliphatischen bifunktionellen Säuren, vorzugsweise C₂-C₁₂-Alkyldicarbonsäuren, wie beispielsweise und bevorzugt Bernsteinsäure oder Adipinsäure, und/oder gegebenenfalls aromatischen bifunktionellen Säuren wie beispielsweise Terephthalsäure oder Isophthalsäure oder Naphthalindicarbonsäure und zusätzlich gegebenenfalls geringen Mengen höherfunktionellen Säuren wie beispielsweise Trimellitsäure oder
   B) aus säure- und alkoholfunktionalisierten Bausteinen, vorzugsweise mit 2 bis 12 C-Atomen in der Alkylkette, beispielsweise Hydroxybuttersäure oder Hydroxyvaleriansäure oder Milchsäure, oder deren Derivaten, beispielsweise ε-Caprolacton oder Dilactid,
oder einer Mischung oder einem Copolymer aus A und B,
wobei die aromatischen Säuren nicht mehr als 50 Gew.-% Anteil, bezogen auf alle Säuren, ausmachen.

Die Säuren können auch in Form von Derivaten wie beispielsweise Säurechloride oder Ester eingesetzt werden;

Aliphatische oder teilaromatische Polyesterurethane, die auch Harnstoffgruppen aufweisen können, aus
C) einem Esteranteil aus bifunktionellen Alkoholen, vorzugsweise C₂-C₁₂-Alkyldiolen wie beispielsweise Ethandiol, Butandiol, Hexandiol, bevorzugt Butandiol, und/oder cycloaliphatischen bifunktionellen oder polycyclischen aliphatischen Alkoholen wie beispielsweise Cyclohexandimethanol und/oder gegebenenfalls geringeren Mengen verzweigten bifunktionellen Alkoholen, vorzugsweise C₃-C₁₂-Alkyldiolen, wie beispielsweise Neopentylglykol, und zusätzlich gegebenenfalls geringen Mengen höherfunktionellen Alkoholen, vorzugsweise C₃-C₁₂-Alkylpolyolen, wie beispielsweise 1,2,3-Propantriol oder Trimethylolpropan, sowie aus aliphatischen bifunktionellen Säuren, vorzugsweise C₂-C₁₂-Alkyldicarbonsäuren, wie beispielsweise und bevorzugt Bernsteinsäure oder Adipinsäure, und/oder gegebenenfalls aromatischen bifunktionellen Säuren wie beispielsweise Terephthalsäure oder Isophthalsäure oder Naphthalindicarbonsäure und zusätzlich gegebenenfalls geringen Mengen höherfunktionellen Säuren wie beispielsweise Trimellitsäure oder
D) aus säure- und alkoholfunktionalisierten Bausteinen, vorzugsweise mit 2 bis 12 C-Atomen beispielsweise Hydroxybuttersäure oder Hydroxyvaleriansäure oder Milchsäure, oder deren Derivaten, beispielsweise ε-Caprolacton oder Dilactid,
   oder einer Mischung oder einem Copolymer aus C und D, und
E) aus dem Reaktionsprodukt von C und/oder D mit aliphatischen und/oder cycloaliphatischen bifunktionellen und zusätzlich gegebenenfalls höherFunktionellen Isocyanaten, mit vorzugsweise 1 bis 12 C-Atomen bzw. 5 bis 8 C-Atomen im Falle von cycloaliphatischen Isocyanaten, z.B. Tetramethylendiisocyanat, Hexamethylendiisocyanat, Isophorondiisocyanat, gegebenenfalls zusätzlich mit linearen und/oder verzweigten und/oder cycloaliphatischen bifunktionellen und/oder höherfunktionellen Alkoholen, vorzugsweise C₃-C₁₂-Alkylpolyolen bzw. 5-8 C-Atomen im Falle von cycloaliphatischen Alkoholen, z.B. Ethandiol, Hexandiol, Butandiol, Cyclohexandimethanol, und/oder gegebenenfalls zusätzlich mit linearen und/oder verzweigten und/oder cycloaliphatischen bifunktionellen und/oder höherfunktionellen Dialkylaminen oder Aminoalkoholen mit vorzugsweise 2 bis 12 C-Atomen in der Alkylkette, wie beispielsweise Ethylendiamin oder Aminoethanol und/oder gegebenenfalls weitere modifizierte Amine oder Alkohole wie beispielsweise Ethylendiaminethansulfonsäure, als freie Säure oder Salz,
wobei der Esteranteil C) und/oder D) mindestens 75 Gew.-%, bezogen auf die Summe aus C), D) und E), beträgt;

Aliphatisch-aromatische Polyestercarbonate aus
F) einem Esteranteil aus linearen bifunktionellen Alkoholen, vorzugsweise C₂-C,₂-Alkyldiolen wie beispielsweise Ethandiol, Butandiol, Hexandiol, bevorzugt Butandiol und/oder cycloaliphatischen bifunktionellen Alkoholen, wie beispielsweise Cyclohexandimethanol und/oder gegebenenfalls geringen Mengen verzweigten bifunktionellen Alkoholen, vorzugsweise mit 3 bis 12 C-Atomen in der Alkylkette, wie beispielsweise Neopentylglykol, und zusätzlich gegebenenfalls geringen Mengen höherfunktionellen Alkoholen, vorzugsweise mit 3 bis 12 C-Atomen in der Alkylkette, wie beispielsweise 1,2,3-Propantriol oder Trimethylolpropan, sowie aus linearen und/oder cycloaliphatischen bifunktionellen und zusätzlich gegebenenfalls geringen Mengen höherfunktionellen Säuren, vorzugsweise mit 2 bis 12 C-Atomen in der Alkylkette bevorzugt Adipinsäure,
   oder
G) aus säure- und alkoholfunktionalisierten Bausteinen, vorzugsweise mit 2 bis 12 C-Atomen in der Alkylkette, beispielsweise Hydroxybuttersäure oder Hydroxyvaleriansäure oder Milchsäure, oder deren Derivaten, beispielsweise ε-Caprolacton oder Dilactid,
   oder einer Mischung oder einem Copolymer aus F) und G) und
H) einem Carbonatanteil, der aus aromatischen bifunktionellen Phenolen, bevorzugt Bisphenol-A, und Carbonatspendern, beispielsweise Phosgen, hergestellt wurde.

Der Esteranteil F) und/oder G) muß mindestens 70 Gew.-%, bezogen auf die Summe aus F), G) und H) beträgt;

Aliphatische oder teilaromatische Polyesteramide aus
I) einem Esteranteil aus linearen oder aromatischen Alkoholen, vorzugsweise C₂-C₁₂-Alkyldiolen, wie beispielsweise Ethandiol, Butandiol, Hexandiol, bevorzugt Butandiol und/oder cycloaliphatischen bifunktionellen Alkoholen wie beispielsweise Cyclohexandimethanol und/oder gegebenenfalls geringen Mengen verzweigten bifunktionellen Alkoholen, vorzugsweise C₃-C₁₂-Alkyldiolen, wie beispielsweise Neopentylglykol, und zusätzlich gegebenenfalls geringen Mengen höherfunktionellen Alkoholen, vorzugsweise C₃-C₁₂-Alkylpolyole, wie beispielsweise 1,2,3-Propantriol oder Trimethylolpropan sowie aus linearen und/oder cycloaliphatischen bifunktionellen, und zusätzlich gegebenenfalls geringen Mengen höherfunktionellen Säuren, vorzugsweise mit 2 bis 12 C-Atomen in der Alkylkette bzw. Phenyl- oder Naphtylringe, bevorzugt Adipinsäure, oder
K) aus säure- und alkoholfunktionalisierten Bausteinen, vorzugsweise mit 2 bis 12 C-Atomen in der Kohlenstoffkette, beispielsweise Hydroxybuttersäure oder Hydroxyvaleriansäure oder Milchsäure, oder deren Derivaten, beispielsweise ε-Caprolacton oder Dilactid,
   oder einer Mischung oder einem Copolymer aus I) und K) und
L) einem Amidanteil aus linearen und/oder cycloaliphatischen bifunktionellen und/oder gegebenenfalls geringen Mengen verzweigten bifunktionellen Aminen mit vorzugsweise 1 bis 12 C-Atomen in der Alkylkette bzw. C₅ oder C₆ cycloaliphatischen bifunktionellen Aminen und zusätzlich gegebenenfalls geringen Mengen höherfunktionellen Aminen, unter den Aminen bevorzugt Isophorondiamin und besonders bevorzugt Hexamethylendiamin, sowie aus linearen und/oder cycloaliphatischen bifunktionellen und/oder gegebenenfalls geringen Mengen verzweigten bifunktionellen und zusätzlich gegebenenfalls geringen Mengen höherfunktionellen Säuren, vorzugsweise mit 2 bis 12 C-Atomen in der Alkylkette, bevorzugt Adipinsäure, oder
M) aus einem Amidanteil aus säure- und aminfunktionalisierten cycloaliphatischen Bausteinen, vorzugsweise mit 4 bis 20 C-Atomen in der cycloaliphatischen Kette, bevorzugt ω-Laurinlactam und besonders bevorzugt ε-Caprolactam,
   oder einer Mischung aus L) und M) als Amidanteil.

Der Esteranteil A) und/oder B) muß mindestens 30 Gew.-%, bezogen auf die Summe aus I), K), L) und M) betragen.

Alle biologisch und enzymatisch abbaubaren Polyesterurethane, Polyester, Polyestercarbonate und Polyesteramide haben ein Molgewicht von mindestens 10.000 g/mol und besitzen im allgemeinen eine statistische Verteilung der Ausgangsstoffe im Polymer. Bei polyurethantypischem Polymeraufbau, gegebenenfalls aus C) und D) sowie aus E) ist eine vollständig statistische Verteilung der Monomerbausteine nicht immer zu erwarten. Alle biologisch abbaubaren Polyesterurethane, Polyester, Polyestercarbonate und Polyesteramide, bevorzugt Polyesterurethane, können als Substanz, Lösung oder Dispersion, als Dispersion bevorzugt in Wasser, vorliegen.

Die erfindungsgemäßen vollständig biologisch und enzymatisch abbaubaren Polyesterurethane, Polyester, Polyestercarbonate und Polyesteramide können mit Füll- und Verstärkungsstoffen und/oder mit Verarbeitungshilfsmitteln wie beispielsweise Nukleierungshilfsmitteln, Entformungshilfsmitteln oder Stabilisatoren ausgestattet sein, wobei darauf zu achten ist, daß die vollständige biologische und enzymatische Abbaubarkeit nicht beeinträchtigt wird oder die verbliebenen Substanzen im Sinne einer Weiterbehandlung (z.B. Abwasserreinigung) unschädlich sind.

Erfindungsgemäß geeignete Füll- und Verstärkungsstoffe können sein Mineralien wie beispielsweise Kaolin, Kreide, Gips, Kalk oder Talk oder Naturstoffe wie beispielsweise Stärke oder modifizierte Stärke, Cellulose oder Cellulosederivate oder Celluloseprodukte, Holzmehl oder Naturfasern wie beilspielsweise Hanf, Flachs, Raps oder Ramie.

Die erfindungsgemäßen vollständig biologisch und enzymatisch abbaubaren Polyesterurethane, Polyestercarbonate und Polyesteramide können miteinander und auch mit anderen Blendpartnern gemischt werden, wobei darauf zu achten ist, daß die verbliebenen Substanzen im Sinne einer Weiterbehandlung (z.B. Abwasserreinigung) unschädlich sind. Als weitere Blendpartner können andere biologisch abbaubare oder biologisch nicht abbaubare Polymere verwendet werden.

Für den enzymatischen Abbau wird die Lipase aus *Candida antarctica* Komponente B., die Lipase aus *Aspergillus niger* oder die Lipase aus Mucor Mi ehei (z.B. Lipozyme 20.000 L, Novo Nordisk A/S, Dänemark) oder eine Mischung davon verwendet. Diese Enzyme können auch jeweils oder in Mischung mit weiteren Enzymen gemischt werden.

Das Verhältnis, in dem Enzyme in Kombination eingesetzt werden, ist durch deren Aktivität gegenüber dem Polymer oder seinen Abbauprodukten festgelegt. Die Enzyme können in einem Aktivitätsverhältnis 5:95 bis 95:5 eingesetzt werden, bevorzugt beträgt das Verhältnis 20:80 bis 80:20 und besonders bevorzugt 40:60 oder 60:40. Die Bestimmung der Aktivität erfolgt beispielsweise über Freisetzung saurer Gruppen während des enzymatischen Polymerabbaus mittels Titration. Es können weitere lipolytische und/oder proteolytische Enzyme eingesetzt werden.

Weiterhin können Metallione, wie beispielsweise Natrium- oder Calciumione, zugesetzt werden. Anionische oder nichtionische Tenside wie beispielsweise sekundäre Alkoholethoxylate können ebenfalls zugesetzt werden.

Die erfindungsgemäß verwendbare Lipase (B) aus dem Stamm Candida antarctica Komponente B ist beschrieben in WO 88/02775.

Die Lipase Lipozyme 20.000 L ist ein Handelsprodukt der Fa. Novo Nordisk, Dänemark.

Die Lipase aus dem Stamm Aspergillus niger ist käuflich zu erhalten beispielsweise bei der Fa. Fluka, Buchs, Liechtenstein.

Als lipolytische Enzyme werden im Sinne dieser Erfindung Lipasen, Cutinasen, Esterasen, Phospholipasen and Lysophospholipasen bezeichnet. Die lipolytischen Enzyme stammen bevorzugt aus Mikroorganismen. Insbesondere stammen sie aus Bakterien, Pilzen oder Hefen. In einer besonders bevorzugten Ausführungsform können die lipolytischen Enzyme stammen aus *Absidia,* insbesondere *Absidia blakesleena* und *Absidia corymbifera, Aspergillus,* insbesondere *Aspergillus niger* und *Aspergillus flavus, Achromobacter,* insbesondere *Achromobacter iophagus, Aureobasidium,* insbesondere *Aureobasidium pullulans, Bacillus,* insbesondere *Bacillus pumilus* und *Bacillus stearothermophilus, Brochotrix,* insbesondere *Brochotrix thermosophata, Candida,* insbesondere *Candida cylindracea (Candida rugosa), Candida paralypolitica* und *Candida antarctica, Chromobacter,* insbesondere *Chromobacter viscosum, Coprinus,* insbesondere *Coprinus cinerius, Fusarium*, insbesondere *Fusarium oxysporum* und *Fursarium solani, Geotricum* insbesondere *Geotricum penicillatum, Hansenula* insbesondere *Hansenula anomala, Humicola,* insbesondere *Humicola brevispora, Humicola brevis* var. thermoidea und *Humicola insolens, Hyphozyma, Lactobacillus,* insbesondere *Lactobacillus curvatus, Penicillium* insbesondere *Penicillium cyclopium, Penicillium crustosum* und *Penicillium expansum, Pseudomonas,* insbesondere *Pseudomonas aeruginosa, Pseudomonas cepacia, Pseudomonas fluorescens, Pseudomonas fragi, Pseudomonas mephitica, Pseudomonas alcaligenes, Pseudomonas plantari, Pseudomonas pseudoalcaligenes, Pseudomonas putida, Pseudomona*s *mendocina* oder *Pseudomonas stutzeri, Rhizomucor,* insbesondere *Rhizomucor miehei, Rhizopus* insbesondere *Rhizopus japonius, Rhizopus microsporus, Rhizopus delemar, Rhizopus niveus, Rhizopus arhizus* und *Rhizopus nodosus, Rhodotorula,* insbesondere *Rhodotorula glutinis, Sporobolomyces,* insbesondere *Sporobolomyces shibatanus, Thermomyces,* insbesondere *Thermomyces lanuginosus* (früher *Humicola lanuginosa*), *Thiarosporella,* insbesondere *Thiarosporella phaseolina* und/oder *Trichoderma* insbesondere *Trichoderma harzanium, Trichoderma reesei.* Weiter können die lipolytischen Enzyme auch pflanzlichen oder tierischen Ursprungs sein.

In einer ganz besonders bevorzugten Ausführungsform stammen die lipolytischen Enzyme gemäß dieser Erfindung aus einem Stamm von *Candida cylindracea,* einem Stamm von *Candida antarctica* insbesondere die Lipase B aus *Candida antarctica* (WO 88/02775), aus einem Stamm von *Pseudomonas cepacia,* einem Stamm von *Hyphozyma,* einem Stamm von *Aspergillus niger* und/oder einem Stamm von *Mucor mihei.*

In einer anderen bevorzugten Ausführungsform ist das lipolytische Enzym eine Esterase, die aus einem Stamm von *Rhodosporidium,* insbesondere *Rhodosporidium toruloides* oder einem Stamm von *Pseudomonas* insbesondere *Pseudomonas aerigunosa, Pseudomonas pseudoalcaligenes, Pseudomonas fluorescens, Pseudomonas putida* und *Pseudomonas maltophilia.*

Bevorzugt stammen die Proteasen aus Bakterien der Gattung *Bacillus,* besonders bevorzugt eignen sich Proteasen der Organismen *Bacillus alcalophilus* und *Bacillus licheniformis.*

Geeignete Mikroorganismen zur Herstellung der erfindungsgemäß geeigneten Enzyme, wie beispielsweise Candida antarctica, können nach den üblichen Methoden der Mikrobiologie isoliert werden, z.B. durch Anzucht auf üblichen Nährmedien und Prüfung auf Lipase-Aktivität. Die Isolierung und Reinigung der Enzyme erfolgt ebenfalls nach den üblichen Methoden (vgl. z.B. WO 88/2775).

Die zur Durchführung des Verfahrens benötigte wäßrige Lösung kann gepuffert sein.. Der pH-Wert liegt im allgemeinen zwischen 2 und 12, bevorzugt zwischen 5 und 9 und besonders bevorzugt zwischen 6 und 8. Die Temperatur, bei der der enzymatische Abbau durchgeführt wird, liegt im allgemeinen zwischen 5 und 95°C liegen, bevorzugt liegt sie zwischen 20 und 70°C und besonders bevorzugt zwischen 30 und 50°C. Alkohol/Wasser-gemische können ebenfalls als Lösungsmittel verwendet werden.

Folgende Puffer sind beispielsweise erfindungsgemäß einsetzbar: Citrat, Acetat, Phosphat, Formiat, Carbonat, Tris-hydroxymethylaminomethat, Triethanolamin, Imidazol, Oxalat, Tartrat, Fumarat, Maleinat, Phthalat, Succinat, Ethylendiamin sowie Gemische mehrerer von ihnen. Bevorzugt werden Acetat, Phosphat und Citrat als Puffer eingesetzt.

Das Verfahren kann auf verschiedene Weise durchgeführt werden:

Das Polymer wird der wässrigen Enzym-enthaltenden Lösung zugesetzt. Das biologisch abbaubare Polymer kann als Film, Folie oder Granulat zugesetzt werden. Formkörper können als Ganzes oder zerkleinert zugesetzt werden. Beschichtete oder verklebte Materialien oder Materialien, bei denen mit biologisch abbaubaren Polymeren Beschichtungen aufgetragen wurden oder Verklebungen erzeugt wurden, wie beispielsweise Papier oder Pappe sowie beschichtetes Papier oder beschichtete Pappe, können als Ganzes oder zerkleinert der enzymhaltigen Lösung zugesetzt werden.

Weiter kann man die wässrige enzymhaltige Lösung durch Aufsprühen auf die abzubauende Beschichtung oder den abzubauenden Formkörper auftragen oder aufsprühen.

Das beschriebene Verfahren des enzymatischen Abbaus von biologisch und enzymatisch abbaubaren Polymeren (=BUEAP) sowie daraus hergestellten Blends kann erfindungsgemäß beispielsweise eingesetzt werden zum bzw. zur
- Einschluß von Chemikalien, Wirkstoffen, Hormonen, Hilfsmitteln, Enzymen, Mikroorganismen, Pflanzensamen in BUEAP (z.B. Kapseln und Mikrokapseln) und deren gezielter Freisetzung durch den Zusatz von Enzymen.
- Einsatz von BUEAP als Kleber oder Binder zum Herstellen von Verbundmaterialien oder Formteilen aus nicht formbaren Materialien mit dem Ziel, diese durch Zusatz von Enzymen wieder aufzulösen.
- Einsatz von BUEAP zur Herstellung polymerer Verbunde wie beispielsweise Holzverbunde für Verschalungen (z.B. Bauverschalungen) mit dem Ziel, diese durch Zusatz von Enzymen aufzulösen bzw. ihre Ablösbarkeit zu beschleunigen
- Einsatz von BUEAP zum Beschichten, Verkleben oder Leimen von Pappe oder Papier mit dem Ziel, BUEAP enzymatisch abzubauen und zu entfernen. Dieses umfaßt insbesondere das Recycling von beschichtetem und/oder geleimtem Papier, Kaschierfolien oder Blisterverpackungen. Dieses umfaßt auch Blends aus BUEAP und nicht abbaubaren Polymeren, die durch die Enzymbehandlung ab- oder auflösbar werden. Dies umfaßt weiter das Beschichten von Pappe oder Papier mit BUEAP mit dem Ziel, schwer ablösbare Druckfarben (z.B. solche, die mit UV vernetzbar sind) mit Hilfe von Enzymen in einem Deinkingprozeß zu entfernen.
- Einsatz von BUEAP zum Verkleben oder Beschichten von Pappe oder Papier mit anderen Kunststoffen, Lacken oder metallischen Materialien insbesondere Aluminium mit dem Ziel, BUEAP enzymatisch abzubauen und so die anderen Kunststoffe, Lacke oder Metalle zu entfernen um sie gegebenenfalls zu recyclen. Folgende Kunststoffe oder Lacke sind u. a. erfindungsgemäß: Polyester, Polyamide, Polyurethane, Polyolefine insbesonders Polyethylen und Polypropylen, Polyacrylate, Elastomere wie Kautschuk und seine Derivate, Polyvinylalkohol, Polyvinylacetat, Celluloseester, Acrylnitril enthaltende Styrolbutadienpolymere und Melaninharze. Dieses umfaßt insbesondere das Recycling von beschichtetem Papier, Kaschierfolien oder Blisterverpackungen.
- Einsatz von BUEAP als Binder für das Aufbringen von Mikrokapseln auf kohlefreie Durchschreibepapiere mit dem Ziel, den Binder selektiv durch Enzyme zu entfernen um das Papier zu recyclen.
- Einsatz von Formkörpern, Flächengebilden, Verklebungen, Beschichtungen oder Schäumen aus BLJEAP mit dem Ziel, diese durch eine Vorbehandlung mit Enzymen abzubauen. Dies umfaßt insbesondere die Verflüssigung mit dem Ziel, die BUEAP nach Nutzung als Abfall über eine Kläranlage zu entsorgen oder das Volumen des Abfalls zu reduzieren.
- Herstellung von Formkörpern, Flächengebilden, Schäumen oder Beschichtungen die durch den Zusatz geeigneter Enzyme gezielt porenhaltig gemacht werden können.
- Herstellung von Fasern, Geweben, Textilien aus BUEAP, die durch den Einsatz von Enzymen aufgelöst oder in ihrem Volumen reduziert werden können.
- Einsatz von Enzymen zum Abbau von BUEAP mit dem Ziel, daraus wässrige Dispersionen herzustellen.
- Selektive Entfernung von Beschichtungen, Überzügen, Hüllen oder Lacken aus BUEAP mit Hilfe von Enzymen.
- Herstellung von Oligomeren aus BUEAP mit Hilfe von Enzymen.
- Herstellung von Flächengebilden, Formkörpern, Schäumen oder Beschichtungen, die Chemikalien, Wirkstoffe, Hilfsmittel, Enzyme, Mikroorganismen oder Pflanzensamen enthalten können, um diese auszubringen und durch enzymatischen Abbau dann freizusetzen.
- Herstellung von Verpackungen aus BUEAP jeder Art mit dem Ziel, das Verpackte zu behandeln und nach der Behandlung durch Zusatz von Enzymen wieder freizusetzen. Dies betrifft insbesondere das Verpacken von Wäsche und das enzymatische Auflösen der Verpackung in einem Waschgang. Dies betrifft weiter insbesondere die Sammlung von Nahrungsmittelresten oder anderen Gütern in Folien aus BUEAP mit dem Ziel, diese zu sterilisieren, steril zu lagern und dann durch Zusatz von Enzymen wieder freizusetzen.
- Auflösen von Hygiene bags (Ostomy-Bags) für künstliche Darmausgänge mit Hilfe von Enzymen.
- Einsatz von BUEAP zur Herstellung von Druckfarben, mit dem Ziel, eine enzymatisch auf- und/oder ablösbare Farbe für einen enzymatischen Deinkingprozess herzustellen.
- Einsatz von BUEAP zum Verpacken von Wirkstoffen oder toxischen Verbindungen insbesondere Pflanzenschutzmitteln mit dem Ziel, eine enzymatisch auflösbare Verpackung oder ein enzymatisch auflösbares inlay herzustellen, das ein schadstofffreies Recycling der Umverpackung ermöglicht.
- Einsatz von BUEAP zum Sammeln von Abfällen insbesondere Fäkalien mit dem Ziel, die Verpackung nach der Sammlung mit Hilfe von Enzymen aufzulösen um das Verpackte freizusetzen und/oder zu entsorgen.
- Einsatz vom BUEAP in Kombination mit anderen Werkstoffen oder als deren Beschichtung (z.B. Metallen oder nicht abbaubaren Kunststoffen) mit dem Ziel, die BUEAP nach Nutzung enzymatisch abzubauen um die anderen Werkstoffe zurückzugewinnen. Dies gilt insbesondere für das Recycling von elektronischen Bauelementen.
- Einsatz einer Kombination von BUEAP und Enzymen mit dem Ziel, die BUEAP mit Enzymen zu behandeln, um deren biologische Abbaubarkeit in einem Kompostierprozeß oder einem anaeroben Behandlungsprozeß zu beschleunigen.

### Beispiele

Die in den Beispielen angegebenen Enzyme werden als Feststoff oder als flüssige Enzymlösung zugesetzt. Die zugesetzten Aktivitäten ergeben sich aus folgenden Angaben:
1. Lipozym 20.000 L (Lipase aus Mucor Mihei) ist ein Handelsprodukt der Firma Novo Nordisk. Die Aktivität der Enzymlösung wird vom Hersteller garantiert. Sie beträgt 20.000 Lipase Units/g. Dabei ist ein unit definiert als die Menge Enzym, die aus Tributyin pro Minute bei 30°C und pH 7,0 ein µmol Butyrat freisetzt. Die Methode zur Aktivitätsbestimmung ist beim Hersteller unter der Bezeichnung "AF 95" erhältlich.
2. Lipase Komponente B aus Candida antarctica ist eine Enzymlösung, deren Aktivität 16.000 LU/ml besitzt. Es wird ein experimentelles Produkt der Firma Novo Nordisk eingesetzt. Die Aktivität ist wiederum definiert als Freisetzung von Butyrat aus Tributrin. Die Methode zur Aktivitätsbestimmung ist bei Novo Nordisk unter der Bezeichnung "AF 95/5" erhältlich.
3. Lipase aus Aspergillus niger ist ein Handelprodukt der Firma Fluka. Die angegebene Aktivität beträgt 1 U/mg. Die Aktivität ist definiert als die Enzymmenge, die 1 µmol Ölsäure pro Minute bei pH 8 und 40°C aus Triolein (ebenfalls Fluka) freisetzt.

### Beispiel 1

Kleine Stücke einer Blasfolie mit einer Dicke von 50 pm aus Polyesteramid aus 60 Gew.% Caprolactam und 40 Gew.% Ester aus Adipinsäure und Butandiol statistisch copolycondensiert mit einer relativen Lösungsviskosität von 2,5, gemessen an einer 1-gew.-%igen Lösung in meta-Kresol bei 20°C werden in je 10 ml 100 mM Kalium-Phosphat-Puffer pH 7,0 eingelegt.

Anschließend wird das Enzym in fester Form in der angegebenen Menge zugesetzt.

Die Inkubation erfolgt über mehrere Stunden.

**Tabelle 1: Abbau von Polyesteramid**

| | **Enzym** | **Eingesetzte Menge** | **Abbau** |
|---|---|---|---|
| Beispiel 1 | Lipase aus Candida antarctica, Komponente B | 3 mg | ++ |
| Kontrolle | Destilliertes Wasser | | - |
| Kontrolle | Puffer | | - |

| | | | |
|---|---|---|---|
| - kein Abbau, Folie intakt +- kaum Abbau, Folie fast vollständig + Abbau unvollständig, Folie zu zahlreichen Stücken zerfallen ++ vollständiger Abbau, Folie vollständig aufgelöst | | | |

Obiges Beispiel zeigt, daß ein vollständiger Abbau im Testzeitraum mit der Lipase aus candida antarctica, Komponente B erreicht wird. Die Kontrollexperimente belegen, daß der Zusatz von Wasser und Puffer das Polymer nicht abbauen bzw. nur unvollständig abbauen.

### Beispiel 2

Spritzgußteile und Blasfolie unterschiedlicher Dicke aus Polyesteramid mit der gleichen Zusammensetzung wie in Beispiel 1 werden bei 37 °C unter Schütteln (200 rpm) in 200 ml 50 mM KP-Puffer pH 7,5 (0,02 % Na-Azid) inkubiert. 50 mg festes Enzymgranulat der Lipase Komponente B aus *Candida antarctica* werden zugesetzt. Während der Inkubation der Proben wird der pH-Wert durch Zusatz von KOH konstant gehalten. Der vollständige Abbau der Probe wird durch visuelle Begutachtung bestimmt.

**Tabelle 2: Abbau von Formkörpern mit Enzymen**

| **Ansatz Nr. Beispiel 2** | **Dicke der Probe** | **vollständiger Abbau nach Tagen** | **Ausgangsgewicht des Polymeren [g]** |
|---|---|---|---|
| 1 | Blasfolie 50 µm | 0,21 | 0,35 |
| 2 | 0,9 mm | 3,9 | 1,4 |
| 3 | 1,7 mm | 6,6 | 1,7 |
| 4 | 4 mm | 14 | 1,5 |
| 5 | 6 mm | 22 | 1,8 |

### Beispiel 3

Schreibpapier wird mit einer Blasfolie aus Polyesteramid mit der gleichen Zusammensetzung wie in Beispiel 1 beschichtet. Das beschichtete Papier wird in einem Mixer in kleine Stücke zerschlagen und in eine mit 50 mM KP-Puffer pH 7,0 (0,02 % Azid) gepufferte Lösung überführt. Es wird eine Stoffdichte von 3 % eingestellt. Der Lösung werden 0,5 % (v/v) einer Enzymlösung zugesetzt, die die Lipase Komponente B aus *Candida antarctica* enthält. In regelmäßigen Abständen werden dem Gemisch Proben entnommen, in denen der Gehalt an Adipinsäure gemessen wird. Diese ist im geprüften Polymer als Monomerbaustein enthalten.

In einem Vorversuch ist gefunden worden, daß eine dieser Beschichtung vergleichbare Blasfolie genau dann vollständig abgebaut worden ist, wenn der Gehalt an Adipinsäure in der Flüssigkeit 6 mmol/l übersteigt. Daher kann der vollständige Abbau der Papierbeschichtung über die Freisetzung von Adipinsäure verfolgt werden.

Innerhalb von 2 Stunden ist die Beschichtung vollständig aufgelöst. In einem Vergleichsansatz ohne Enzym wird kein Abbau der Beschichtung beobachtet.

### Beispiel 4

300 mg Granulat eines Harnstoffgruppen aufweisenden Polyesterurethans (Degranil^{®} DLN Handelsprodukt der Firma BAYER AG) werden zu 50 ml Kallum-Phosphat-Puffer, 200 mM, pH 6,95, 0,02 % Natriumazid gegeben. Anschließend werden unterschiedliche Enzyme in der angegebenen Menge zugesetzt. Die Einsatzmenge ist in der Tabelle 3 wiedergegeben. Angegeben ist jeweils die Endkonzentration im Ansatz. Die Endkonzentration flüssiger Enzyme beträgt 1 % (v/v). Bei festen Enzymen wird 0,1 % (w/v) zugesetzt. Nach 20, 51, 164 und 358 Stunden werden den Ansätzen Proben entnommen, in denen der pH-Wert und der Gehalt an Adipinsäure bestimmt wird. Adipinsäure ist eines der Monomere, aus denen das untersuchte Polymer aufgebaut ist. Am Ende der Inkubation wird der Gehalt an nicht abgebautem Polymer bestimmt. Dazu wird der gesamte Ansatz durch einen Faltenfilter gegeben und dessen Gewichtszunahme nach Trocknung bestimmt. Über die Gewichtsdifferenz gegenüber der ursprünglichen Menge wird der Abbaugrad bestimmt. Die Ergebnisse sind in der Tabelle 3 zusammengefaßt.

**Tabelle 3: Abbau des Harnstoffgruppen aufweisenden Polyesterurethans Degranil^{®} DLN mit Enzymen**

| - Restpolymer nach Abschluß der Inkubation - | | |
|---|---|---|
| | **Enzym** | **Menge des Restpolymers in %** |
| Vergleich | ohne | 101,6 |
| Beispiel 4-1 1 | 1 % Lipozym 20.000 L v/v | 8,6 |
| Beispiel 4-2 | 1 % Lip.C.antarctica Komp. B. v/v | 4 |
| Beispiel 4-3 | 0,1 % Lip.A niger w/v | 27,9 |

Degranil^{®} DLN ist ein Handelsprodukt der Firma Bayer
Lipozym 20.000 L ist ein Handelsprodukt der Firma Novo Nordisk.

Die genannten 3 Enzyme sind in der Lage, das geprüfte Polymer in nennenswerten Umfang abzubauen. Die Lipase aus *C. antarctica* Komp. B. baut das Polymer besonders schnell ab. Bereits zum Zeitpunkt der ersten Probennahme beträgt der Gehalt an Adipinsäure über 13 mg/ml. Bei den übrigen Ansätzen erreicht die Menge an freigesetzter Adipinsäure erst am Ende der Inkubation ihr Maximum.

### Beispiel 5

### Enzymatischer Abbau von Polyesterurethanen

Als Prüfmaterial wird feines Granulat von Bionolle 1010 und 3030 eingesetzt. Bionolle 1010 und 3030 sind Handelsprodukte der Firma Showa Denko. Es handelt sich um Polyesterurethane, in denen Polyester mit geringen Mengen Diisocyanat verlängert sind.

300 mg feines Granulat des Polymers werden zu 100 ml Kalium-Phosphat-Puffer, 100 mM, pH 7, 0,02 % Na-Azid gegeben. Anschließend werden lipolytische Enzyme in der angegebenen Menge zugesetzt.

Die Einsatzmenge ist in der Tabelle wiedergegeben. Angegeben ist jeweils die Endkonzentration im Ansatz. Die Endkonzentration flüssiger Enzyme beträgt 1 % (v/v). Bei festen Enzymen wird 0,1 % (w/v) zugesetzt. Am Ende der Inkubation wird der Gehalt an nicht abgebautem Polymer bestimmt. Dazu wird der gesamte Ansatz durch einen Faltenfilter gegeben und dessen Gewichtszunahme nach Trocknung bestimmt. Über die Gewichtsdifferenz gegenüber der ursprünglichen Menge wird der Abbaugrad bestimmt.

Der Abbruch der Ansätze, die Bionolle 1010 enthalten, erfolgt nach 5 Tagen.

Der Abbruch der Ansätze, die Bionolle 3030 enthalten, erfolgt überwiegend nach 2 Tagen. Die Ansätze, die Bionolle 3030 enthalten und die die Enzyme Lipozyme und Lipase aus *Aspergillus niger* enthalten, erfolgt nach 3 Tagen.

Die Ergebnisse sind in der Tabelle 4 zusammengefaßt.

**Tabelle 4**

| **Abbau von mit Diisocyanaten verlängerten Polyestern (Polyesterurethanen) durch Enzyme** | | | |
|---|---|---|---|
| - Restpolymer nach Abschluß der Inkubation - | | | |
| | **Enzym** | **Bionolle 3030** | **Bionolle 1010** |
| | | % der Ausgangsmenge | |
| Kontrolle | ohne | 102 | |
| Beispiel 5-1 | 1 % Lipozyme 20.000 L | 46 | |
| Beispiel 5-2 | 1 % Lipase Cand. antarctica Komponente B | 28 | |
| Beispiel 5-3 | 0,1 % Lip. aus Aspergillus niger | 53 | |
| Kontrolle | ohne | | 99 |
| Beispiel 5-4 | 1 % Lipase Cand. antarctica Komponente B | | 33 |

Lipozyme 20.000 L ist der Handelsname einer Lipase der Firma Novo Nordisk.

### Beispiel 6

### Enzymatischer Abbau von Polylactid

Als Prüfmaterial wird feines Granulat von Polylactid (=PLA) eingesetzt. Die Versuchsdurchführung erfolgt wie in Beispiel 4 beschrieben.

Nach 2 Tagen wird der Gehalt an nicht abgebautem Polymer bestimmt.

Die Ergebnisse sind in der Tabelle zusammengefaßt.

**Tabelle 5**

| **Abbau von Polylactid durch Enzyme** | | |
|---|---|---|
| - Restpolymer nach Abschluß der Inkubation - | | |
| | **Enzym** | **% der Ausgangsmenge** |
| Kontrolle | ohne | 100 |
| Beispiel 6-1 | 1 % Lipozyme 20.000L | 11 |
| Beispiel 6-2 | 0, 1 % Lip. aus Aspergillus niger | 28 |

### Beispiel 7

### Enzymatischer Abbau eines Copolyesters

Als Prüfmaterial wird feines Granulat eines Polyesters, polykondensiert nach üblicher Veresterung aus 2797 g Dimethylterephthalat, 4217 g 1,4-Butandiol, 3157 g Adipinsäure und 3,1 g Titantetraisopropylat/Triphenylphosphat 1:1 1 eingesetzt. Die Versuchsdurchführung erfolgt wie in Beispiel 4 beschrieben.

Nach 5 Tagen wird der Gehalt an nicht abgebautem Polymer bestimmt.

Die Ergebnisse sind in der Tabelle zusammengefaßt.

**Tabelle 6**

| **Abbau von Copolyester durch Enzyme** | | |
|---|---|---|
| - Restpolymer nach Abschluß der Inkubation - | | |
| | **Enzym** | **% der Ausgangsmenge** |
| Kontrolle | ohne | 100 |
| Beispiel | 1% Lipase Cand. antarctica Komponente B | 55 |

### Beispiel 8

### Enzymatische Entfernung einer Polyesteramidbeschichtung und einer Polyethylenbeschichtung auf Papier

Papiere, die mit biologisch abbaubarem Polyesteramid (siehe Beispiel 1) beschichtet sind oder auf die eine Polyethylen-Folie aufgeklebt ist, werden enzymatisch behandelt. Zum Aufkleben des Polyethylens auf das Papier wird biologisch abbaubares Polyesteramid verwendet.

Jeweils 5 x 5 cm große Stücke von beschichtetem Papier werden ausgeschnitten und in einem verschlossenen 250 ml-Erlenmeyerkolben in 120 ml 0,1 M di-Kaliumhydrogenphosphat-Pufferlösung (pH 6,5) bei 37°C unter starkem Schütteln (220 U/min) inkubiert. Die Pufferlösung enthält 0,5 % v/v Lipase aus *Candida antarctica* Komp. B und 0,02 % w/v Na-Azid.

Nach wenigen Stunden Inkubationszeit ist die biologisch abbaubare PolyesteramidBeschichtung von dem Papier heruntergelöst. Dies kann an der leichten Trübung der Pufferlösung erkannt werden.

Nach 36 h hat sich die mit biologisch abbaubarem Polyesteramid aufgeklebte Polyethylen-Folie von dem Papier getrennt. In der Lösung schwimmen zwei getrennte Schichten von Polyethylen und Papier. Bei kleineren Papierstücken, die genauso beschichtet sind, erfolgt die Ablösung deutlich schneller.

In der Pufferlösung können die enzymatischen Abbauprodukte des Polyesteramids durch HPLC-Analytik nachgewiesen werden.

Die Pufferlösung des Kontrollansatzes, der kein Enzym enthält, ist bei Versuchsabbruch nach 36 Stunden noch klar und enthält keine Abbauprodukte des Polyesteramids.

### Beispiel 9

### Verkleben von Papier mit biologisch abbaubarem Polyesteramid und anschließende enzymatische Trennung der Papierschichten

Papiere können mit biologisch abbaubarem Polyesteramid zusammengeklebt und anschließend durch enzymatische Behandlung mit Lipase aus *Candida antarctica* Komponente B wieder voneinander getrennt werden.

Dazu werden auf einer Heizplatte zwei ca. 2 x 2 cm große Papierstücke, zwischen die ein gleichgroßes Stück einer Folie aus biologisch abbaubarem Polyesteramids (siehe Beispiel 1) gelegt wird, bei ca. 140 °C zusammengeklebt. Zur Beschwerung legt man bei dem Klebevorgang auf die obere Papierschicht eine Metallplatte. Nach ca. 2 min sind die beiden Papierschichten fest miteinander verklebt.

Zur Trennung der Papierschichten werden die verklebten Papiere in eine Petrischale, die 30 ml 0,1 M di-Kaliumhydrogenphosphat-Pufferlösung (pH 6,5) mit 2 % v/v Lipase aus *Candida antarctica* Komp. B und 0,02 % w/v Na-Azid enthält, gelegt. Unter leichtem Schütteln werden die Ansätze bei 37 °C inkubiert.

Nach 4 h haben sich die Papiere voneinander gelöst. In der Kontrollprobe, die kein Enzym enthält, kleben die beiden Papierschichten unverändert aneinander.

In gleicher Weise werden Papiere auch einseitig mit biologisch abbaubarem Polyesteramid beschichtet. Die Inkubation dieser Papiere unter den gleichen Bedingungen ergibt eine Ablösung der Polyesteramidschicht in drei Stunden. Der Nachweis erfolgt über Zunahme der Trübung.

Unter Verwendung einer gefärbten Folie kann der Nachweis des Abbaus auch über das Verschwinden der Farbe nachgewiesen werden.

## Patentansprüche

1. Verfahren zum enzymatischen Abbau von biologisch abbaubaren Polymeren ausgewählt von aliphatischen oder teilaromatischen Polyestern, thermoplastischen aliphatischen oder teilaromatischen Polyester-urethanen, die auch Harnstoffgruppen aufweisen können, aliphatisch-aromatischen Polyestercarbonaten und/oder aliphatischen oder teilaromatischen Polyesteramiden, wobei die Polymere mit einer wässrigen Lösung, die gepuffert sein kann, enthaltend eine oder mehrere Lipasen aus Candida antarctica oder Cutinasen aus Humicola insolens oder eine oder mehrere dieser Lipasen und Cutinasen in Kombination mit weiteren Enzymen behandelt werden.

2. Verfahren gemäß Anspruch 1, wobei der pH der Lösung zwischen 2 und 12 liegt.

3. Verfahren gemäß Anspruch 1, wobei Alkohol/Wasser-Gemische als Lösungsmittel verwendet werden können.

4. Verfahren gemäß Anspruch 1, wobei das Polymer als Film, Folie, Granulat, oder als Beschichtung,, als Ganzes oder zerkleinert vorliegt.

5. Verfahren gemäß Anspruch 1, wobei als Polymere eingesetzt werden:
aliphatische oder teilaromatische Polyester aus
A) linearen bifunktionellen Alkoholen und gegebenenfalls cycloaliphatischen bifunktionellen Alkoholen und gegebenenfalls verzweigten bifunktionellen Alkoholen und zusätzlich gegebenenfalls höherfunktionellen Alkoholen sowie aus aliphatischen bifunktionellen Säuren und/oder gegebenenfalls aromatischen bifunktionellen Säuren und zusätzlich gegebenenfalls höherfunktionellen Säuren oder
B) aus säure- und alkoholfunktionalisierten Bausteinen oder deren Derivaten
oder einer Mischung oder einem Copolymer aus A und B,
wobei die aromatischen Säuren nicht mehr als 50 Gew.-% Anteil bezogen auf alle Säuren, ausmachen, und die Säuren auch in Form von Derivaten eingesetzt werden können;
aliphatische oder teilaromatische Polyesterurethane, die auch Harnstoffpppen aufweisen können, aus
C) einem Esteranteil aus bifunktionellen Alkoholen und/oder cycloaliphatischen bifunktionellen oder polycyclischen aliphatischen Alkoholen und/oder gegebenenfalls geringen Mengen verzweigten bifunktionellen Alkoholen und zusätzlich gegebenenfalls geringen Mengen höherfunktionellen Alkoholen, sowie aus aliphatischen bifunktionellen Säuren und/oder gegebenenfalls aromatischen bifunktionellen Säuren und zusätzlich gegebenenfalls geringen Mengen höherfunktionellen Säuren oder
D) aus säure- und alkoholfunktionalisierten Bausteinen, oder deren Derivaten, oder einer Mischung oder einem Copolymer aus C und D, und
E) aus dem Reaktionsprodukt C und/oder D mit aliphatischen und/oder cycloaliphatischen bifunktionellen und zusätzlich gegebenenfalls höherfunktionellen Isocyanaten, gegebenenfalls zusätzlich mit linearen und/oder verzweigten und/oder cycloaliphatischen bifunktionellen und/oder höherfunktionellen Alkoholen, und/oder gegebenenfalls zusätzlich mit linearen und/oder verzweigten und/oder cycloaliphatischen bifunktionellen und/oder höherfunktionellen Dialkylaminen oder Aminoalkoholen und/oder gegebenenfalls weitere modifizierte Amine oder Alkohole als fkeie Säure oder Salz,
wobei der Esteranteil C) und/oder D) mindestens 75 Gew.-%, bezogen auf die Summe aus C), D) und E), beträgt;
Aliphatisch-aromatische Polyestercarbonate aus
F) einem Esteranteil aus linearen bifunktionellen Alkoholen, und/oder cycloaliphatischen bifunktionellen Alkoholen, und/oder gegebenenfalls geringen Mengen verzweigten bifunktionellen Alkoholen, und zusätzlich gegebenenfalls geringen Mengen höherfunktionellen Alkoholen, sowie aus linearen und/oder cycloaliphatischen bifunktionellen und zusätzlich gegebenenfalls geringen Mengen höherfunktionellen Säuren, oder
G) aus säure- und alkoholfunktionalisierten Bausteinen, oder deren Derivaten, oder einer Mischung oder einem Copolymer aus F) und G) und
H) einem Carbonatanteil, der aus aromatischen bifunktionellen Phenolen, und Carbonatspendern hergestellt wird, wobei der Esteranteil F) und/oder G) mindestens 70 Gew.-%, bezogen auf die Summe aus F), G) und H) beträgt;
Aliphatische oder teilaromatische Polyesteramide aus
I) einem Esteranteil aus linearen oder aromatischen Alkoholen, und/oder cycloaliphatischen bifunktionellen Alkoholen und/oder gegebenenfalls geringen Mengen verzweigten bifunktionellen Alkoholen, und zusätzlich gegebenenfalls geringen Mengen höherfunktionellen Alkoholen, sowie aus linearen und/oder cycloaliphatischen bifunktionellen, und zusätzlich gegebenenfalls geringen Mengen höherfunktionellen Säuren, oder
K) aus säure- und alkoholfunktionalisierten Bausteinen, oder deren Derivaten,
oder einer Mischung oder einem Copolymer aus I) und K) und
L) einem Amidanteil aus linearen und/oder cycloaliphatischen bifunktionellen und/oder gegebenenfalls geringen Mengen verzweigten bifunktionellen Aminen und zusätzlich gegebenenfalls geringen Mengen höherfunktionellen Aminen, sowie aus linearen und/oder cycloaliphatischen bifunktionellen und/oder gegebenenfalls geringen Mengen verzweigten bifunktionellen und zusätzlich gegebenenfalls geringen Mengen höherfunktionellen Säuren, oder
M) aus einem Amidanteil aus säure- und aminfunktionalisierten cycloaliphatischen Bausteinen, vorzugsweise mit 4 bis 20 C-Atomen in der cycloaliphatischen Kette, bevorzugt ω-Laurinlactam und besonders bevorzugt ε-Caprolactam,
oder einer Mischung aus L) und M) als Amidanteil, wobei der Esteranteil A) und/oder B) mindestens 30 Gew.-%, bezogen auf die Summe aus I), K), L) und M) beträgt.

## Claims

1. Process for enzymatic degradation of biodegradable polymers selected from aliphatic or partly aromatic polyesters, thermoplastic aliphatic or partly aromatic polyesterurethanes which may also have urea groups, aliphatic-aromatic polyestercarbonates and/or aliphatic or partly aromatic polyesteramides, wherein the polymers are treated with an aqueous solution, which may be buffered, comprising one or more lipases from Candida antarctica or cutinases from Humicola insolens or one or more of these lipases and cutinases in combination with further enzymes.

2. Process according to Claim 1, wherein the pH of the solution is between 2 and 12.

3. Process according to Claim 1, wherein alcohol/water mixtures may be used as solvents.

4. Process according to Claim 1, wherein the polymer is present in the form of a film, foil, granule, or in the form of a coating, as a whole or in comminuted form.

5. Process according to Claim 1, wherein the polymers used are:
aliphatic or partly aromatic polyesters formed from
A) linear bifunctional alcohols and optionally cycloaliphatic bifunctional alcohols and optionally branched bifunctional alcohols and additionally optionally higher-functional alcohols, and from aliphatic bifunctional acids and/or optionally aromatic bifunctional acids and additionally optionally higher-functional acids or
B) from acid- and alcohol-functionalized units or derivatives thereof
or a mixture or a copolymer of A and B,
where the aromatic acids make up not more than a 50% by weight proportion based on all acids, and the acids may also be used in the form of derivatives;
aliphatic or partly aromatic polyesterurethanes which may also have urea groups, formed from
C) an ester portion formed from bifunctional alcohols and/or cycloaliphatic bifunctional or polycyclic aliphatic alcohols and/or optionally small amounts of branched bifunctional alcohols and additionally optionally small amounts of higher-functional alcohols, and from aliphatic bifunctional acids and/or optionally aromatic bifunctional acids and additionally optionally small amounts of higher-functional acids, or
D) from acid- and alcohol-functionalized units, or derivatives thereof, or a mixture or a copolymer of C and D, and
E) from the reaction products C and/or D with aliphatic and/or cycloaliphatic bifunctional and additionally optionally higher-functional isocyanates, optionally additionally with linear and/or branched and/or cycloaliphatic bifunctional and/or higher-functional alcohols, and/or optionally additionally with linear and/or branched and/or cycloaliphatic bifunctional and/or higher-functional dialkylamines or amino alcohols and/or optionally further modified amines or alcohols as a free acid or salt,
where the ester portion C) and/or D) is at least 75% by weight, based on the sum of C), D) and E);
aliphatic-aromatic polyestercarbonates formed from
F) an ester portion formed from linear bifunctional alcohols, and/or cycloaliphatic bifunctional alcohols, and/or optionally small amounts of branched bifunctional alcohols, and additionally optionally small amounts of higher-functional alcohols, and from linear and/or cycloaliphatic bifunctional and additionally optionally small amounts of higher-functional acids, or
G) from acid- and alcohol-functionalized units, or derivatives thereof, or a mixture or a copolymer of F) and G), and
H) a carbonate portion which is prepared from aromatic bifunctional phenols and carbonate donors, where the ester portion F) and/or G) is at least 70% by weight, based on the sum of F), G) and H);
aliphatic or partly aromatic polyesteramides formed from
I) an ester portion formed from linear or aromatic alcohols, and/or cycloaliphatic bifunctional alcohols and/or optionally small amounts of branched bifunctional alcohols, and additionally optionally small amounts of higher-functional alcohols, and also from linear and/or cycloaliphatic bifunctional acids, and additionally optionally small amounts of higher-functional acids, or
K) from acid- and alcohol-functionalized units, or derivatives thereof,
or a mixture or a copolymer of I) and K) and
L) an amide portion formed from linear and/or cycloaliphatic bifunctional and/or optionally small amounts of branched bifunctional amines and additionally optionally small amounts of higher-functional amines, and from linear and/or cycloaliphatic bifunctional and/or optionally small amounts of branched bifunctional and additionally optionally small amounts of higher-functional acids, or
M) from an amide portion formed from acid- and amine-functionalized cycloaliphatic units, preferably having 4 to 20 carbon atoms in the cycloaliphatic chain, preferably ω-laurolactam and more preferably ε-caprolactam,
or a mixture of L) and M) as the amide portion, where the ester portion A) and/or B) is at least 30% by weight, based on the sum of I), K), L) and M).

## Revendications

1. Procédé de décomposition enzymatique de polymères biodégradables choisis parmi les polyesters aliphatiques ou partiellement aromatiques, les polyester-uréthanes aliphatiques ou partiellement aromatiques thermoplastiques, qui peuvent aussi présenter des groupes urée, des polyester-carbonates aliphatico-aromatiques et/ou des polyester-amides aliphatiques ou partiellement aromatiques, dans lequel les polymères sont traités avec une solution aqueuse pouvant être tamponnée, contenant une ou plusieurs lipases provenant de *Candida antarctica* ou cutinases provenant de *Humicola insolens* ou une ou plusieurs de ces lipases et cutinases en combinaison avec d'autres enzymes.

2. Procédé selon la revendication 1, dans lequel le pH de la solution se situe entre 2 et 12.

3. Procédé selon la revendication 1, dans lequel des mélanges alcool/eau peuvent être utilisés comme solvants.

4. Procédé selon la revendication 1, dans lequel le polymère se présente sous forme de film, de feuille, de granulé ou de revêtement, en tant que tout ou morceau.

5. Procédé selon la revendication 1, dans lequel on utilise comme polymères :
des polyesters aliphatiques ou partiellement aromatiques constitués de :
A) alcools bifonctionnels linéaires et éventuellement alcools bifonctionnels cycloaliphatiques et éventuellement alcools bifonctionnels ramifiés et, en plus, éventuellement alcools de fonctionnalités supérieures ainsi qu'acides bifonctionnels aliphatiques et/ou éventuellement acides bifonctionnels aromatiques et, en plus, éventuellement acides de fonctionnalités supérieures ou
B) éléments à fonctionnalités acides et alcools ou leurs dérivés
ou un mélange ou un copolymère de A et B,
dans lequel les acides aromatiques ne constituent pas plus de 50 % en poids, par rapport à tous les acides, et les acides peuvent être mis en oeuvre également sous forme de dérivés ;
des polyester-uréthanes aliphatiques ou partiellement aromatiques, qui peuvent présenter également des groupes urée, constitués de :
C) une fraction ester provenant d'alcools bifonctionnels et/ou d'alcools bifonctionnels cycloaliphatiques ou aliphatiques polycycliques et/ou éventuellement de faibles quantités d'alcools bifonctionnels ramifiés et, en plus, éventuellement de faibles quantités d'alcools de fonctionnalités supérieures, ainsi que d'acides bifonctionnels aliphatiques et/ou éventuellement d'acides bifonctionnels aromatiques et, en plus, éventuellement de faibles quantités d'acides de fonctionnalités supérieures ou
D) éléments à fonctionnalités acides et alcools, ou leurs dérivés, ou un mélange ou un copolymère de C et D, et
E) produit réactionnel de C et/ou D avec des isocyanates bifonctionnels aliphatiques et/ou cycloaliphatiques et, en plus, éventuellement à fonctionnalités supérieures, éventuellement en plus avec des alcools linéaires et/ou ramifiés et/ou cycloaliphatiques bifonctionnels et/ou à fonctionnalités supérieures, et/ou éventuellement en plus avec des dialkylamines ou aminoalcools linéaires et/ou ramifiés et/ou cycloaliphatiques bifonctionnels et/ou à fonctionnalités supérieures et/ou éventuellement d'autres amines ou alcools modifiés à titre d'acide libre ou de sel,
dans lequel la fraction ester C) et/ou D) se monte à au moins 75 % en poids, par rapport à la somme de C), D) et E) ;
des polyester-carbonates aliphatico-aromatiques, constitués de :
F) une fraction ester provenant d'alcools bifonctionnels linéaires et/ou d'alcools bifonctionnels cycloaliphatiques et/ou éventuellement de faibles quantités d'alcools bifonctionnels ramifiés et, en plus, éventuellement de faibles quantités d'alcools à fonctionnalités supérieures, ainsi que d'acides bifonctionnels linéaires et/ou cycloaliphatiques et, en plus, éventuellement de faibles quantités d'acides à fonctionnalités supérieures, ou
G) éléments à fonctionnalités acides et alcools, ou leurs dérivés, ou un mélange ou un copolymère de F) et G), et
H) une fraction carbonate, qui est fabriquée à partir de phénols bifonctionnels aromatiques et de donneurs de carbonates, où la fraction ester F) et/ou G) se monte à au moins 70 % en poids, par rapport à la somme de F), G) et H) ;
des polyester-amides aliphatiques ou partiellement aromatiques, constitués de :
I) une fraction ester provenant d'alcools linéaires ou aromatiques, et/ou d'alcools bifonctionnels cycloaliphatiques et/ou éventuellement de faibles quantités d'alcools bifonctionnels ramifiés et, en plus, éventuellement de faibles quantités d'alcools à fonctionnalités supérieures, ainsi que d'acides bifonctionnels linéaires et/ou cycloaliphatiques et, en plus, éventuellement de faibles quantités d'acides à fonctionnalités supérieures, ou
K) éléments à fonctionnalités acides et alcools, ou leurs dérivés,
ou un mélange ou un copolymère de I) et K), et
L) une fraction amide provenant d'amines bifonctionnelles linéaires et/ou cycloaliphatiques et/ou éventuellement de faibles quantités d'amines bifonctionnelles ramifiées et, en plus, éventuellement de faibles quantités d'amines à fonctionnalités supérieures, ainsi que d'acides bifonctionnels linéaires et/ou cycloaliphatiques et/ou éventuellement de faibles quantités d'acides bifonctionnels ramifiés et, en plus, éventuellement de faibles quantités d'acides à fonctionnalités supérieures, ou
M) une fraction amide provenant d'éléments cycloaliphatiques à fonctionnalités acides et amines, de préférence avec 4 à 20 atomes de C dans la chaîne cycloaliphatique, de préférence la ω-laurinelactame et particulièrement préférentiellement la ε-caprolactame,
ou un mélange de L) et M) à titre de fraction amide, où la fraction ester A) et/ou B) se monte à au moins 30 % en poids, par rapport à la somme de I), K), L) et M).
